(19) Europäisches Patentamt
European Patent Office
Office européen des brevets

(11) **EP 2 360 545 A1**

(12) **EUROPÄISCHE PATENTANMELDUNG**

(43) Veröffentlichungstag:
**24.08.2011 Patentblatt 2011/34**

(51) Int Cl.:
***G05D 23/13*** *(2006.01)*

(21) Anmeldenummer: **10001533.8**

(22) Anmeldetag: **15.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **SIEMENS AKTIENGESELLSCHAFT**
**80333 München (DE)**

(72) Erfinder:
• **Minuth, Stephan**
**45475 Mülheim a.d. Ruhr (DE)**
• **Riemann, Stefan**
**41564 Kaarst (DE)**
• **Rothe, Klaus**
**46459 Rees (DE)**

(54) **Verfahren zur Regelung eines Ventils**

(57)    Die Erfindung betrifft ein Verfahren zur Reglung eines Umleitdampfventils (46), wobei folgende Gleichung ermittelt wird:

$$t_{Rest,0} = \frac{FB_{max}}{\dot{m}_{W,SOLL} - \dot{m}_{W,IST}},$$

$\Delta t$ ist.

wobei $FB_{max}$ der maximale Wasser-mengenfehlbetrag, $\dot{m}_{W,IST}$ die in eine Dampfleitung (44) eingebrachte Wassermenge und $\dot{m}_{W,SOLL}$ die Soll-Wassermenge ist, wobei das Ventil schließt, wenn $t_{Rest,0}$ kleiner einem Wert

FIG 1

EP 2 360 545 A1

**Beschreibung**

Die Erfindung betrifft ein Verfahren zur Regelung eines Ventils, wobei das Ventil in einer Dampfleitung angeordnet wird, wobei die Dampfleitung eine Vorrichtung zum Einspritzen von Wasser aufweist.

Beim Starten bzw. Hochfahren eines fossilbefeuerten Kraftwerkes wird zunächst ein Kessel des Kraftwerks, der zur Erzeugung von Dampf ausgebildet ist, auf Mindestlast gefahren, was gewöhnlich zwischen 30% und 40% liegt. Der während dieser Hochfahr-Phase erzeugte Frischdampf wird hierbei im sogenannten Bypassbetrieb üblicherweise zunächst an der Dampfturbine direkt zum Kondensator vorbei geleitet. Bei Anlagen mit einer Zwischenüberhitzung wird der Frischdampf hierbei über eine Hochdruck-Umleitstation geführt, auf ein niedriges Temperaturniveau abgespritzt und dann in den kalten Strang der Zwischenüberhitzung geleitet. Der Dampf, der den heißen Strang der Zwischenüberhitzung verlässt, wird über eine Mitteldruck-Umleitstation geführt und mittels Bespritzung mit Wasser gekühlt und in den Kondensator geleitet. Durch ein hohes Druckniveau in der Zwischenüberhitzung, das üblicherweise zwischen ca. 20 bar und 30 bar liegt, ist eine effektive Kühlung der mit Rauchgas beaufschlagten Zwischenüberhitzerrohre gewährleistet.

Für den Betrieb von Dampfturbinenanlagen sind an die Reinheit des Dampfes hohe Anforderungen zu stellen. Insbesondere gilt es zu vermeiden, dass im Dampf partikelförmige Feststoffe mitgeführt werden. Solche Festkörperpartikel können zu Beschädigungen der Dampfturbine und anderen Anlagenteilen führen. Beschädigungen werden insbesondere an der Beschaufelung der Turbine anfallen.

Um eine leichte Überhitzung zu erreichen ist es erforderlich, dass die über die Mitteldruck-Umleitdampfleitung geführte Dampfmenge auf ein niedriges Temperaturniveau abgekühlt wird. Das bedeutet, dass der Umleitdampf in der Umleitdampfleitung mit Wasser abgespritzt werden muss. Allerdings erfordert dies eine zuverlässige und unmittelbare Verfügbarkeit der einzuspritzenden Wassermenge. Des Weiteren wird ein schnelles Wassereinspritzventil und eine sichere Messtechnik benötigt.

Wenn das einzuspritzende Wasser völlig ausfällt, müssen Schutzvorkehrungen getroffen werden, damit keine Beschädigungen entstehen. Derzeit werden die vorhandenen Wassereinspritzschutzvorrichtungen derart ausgelegt, dass nur ein totaler Ausfall des Einspritzwassers berücksichtigt wird.

Auch eine kurzzeitige Unterschreitung der erforderlichen Wassermenge wird als Störung betrachtet, die schlimmstenfalls zu einem gesamten Schließen der Umleitdampfleitung führen kann und sogar zu einem Trip führen könnte, das heißt, ein Abschalten der gesamten Kraftwerksanlage wäre die Folge.

Ein ausgelöster Schnellschluss der Umleitstation kann bei einem Gasturbinentrip zu Auswirkungen auf die Revisionsintervalle bzw. auf die Lebensdauer der Gasturbine führen.

Mit den derzeitigen Schutzvorkehrungen ist es durchaus möglich, dass ein Schnellschluss der Umleitstation erfolgt, obwohl bereits eine Wassermenge von größer als 90% des Sollwerts erreicht wurde und ein Schnellschluss an sich nicht erforderlich wäre.

An dieser Stelle setzt die Erfindung an, deren Aufgabe es ist, ein Verfahren zur Regelung eines Ventils anzugeben, mit der ein Schnellschluss der Umleitstation derart ausgeführt wird, dass eine zu frühzeitige Schließung des Ventils vermieden wird.

Gelöst wird diese Aufgabe durch ein Verfahren zur Regelung eines Ventils gemäß Anspruch 1. Hierbei wird das Ventil in einer Dampfleitung angeordnet, wobei die Dampfleitung eine Vorrichtung zum Einspritzen von Wasser aufweist, wobei eine Ist-Wassermenge $\dot{m}_{W,IST}$ und eine Soll-Wassermenge $\dot{m}_{W,SOLL}$ und ein maximaler Wassermengenfehlbetrag $FB_{max}$ ermittelt werden, und ein Quotient $t_{Rest,0}$ zwischen dem maximalen Wassermengenfehlbetrag $FB_{max}$ und der Differenz der Soll-Wassermenge $\dot{m}_{W,SOLL}$ und der Ist-Wassermenge $\dot{m}_{W,IST}$ gemäß der Gleichung

$$t_{\mathrm{Re}st,0} = \frac{FB_{\max}}{\dot{m}_{W,Soll} - \dot{m}_{W,IST}}$$

gebildet wird und das Ventil schließt, wenn $t_{Rest,0}$ kleiner einem Wert $\Delta t$ ist.

Die Erfindung geht von dem Gedanken aus, dass die derzeit existierenden Schutzvorkehrungen einen Betrieb der Umleitstation ohne ausreichende Einspritzwassermengen für eine bestimmte Zeit $t_{max}$ erlauben. Die vorgenannte Schutzvorkehrung gilt unabhängig von der Dampfmenge und der Einspritzwassermenge in der Umleitstation, d. h., dass auch für die maximale Dampfmenge und völlig fehlende Einspritzwassermengen die Schutzvorkehrungen möglich sind.

Sofern eine Einspritzwassermenge in Folge einer Störung fehlt, hat dies zur Folge, dass die Kühlung ausfällt. Die fehlende Kühlung wird bezogen auf die Enthalpiedifferenz des verdampfenden Wassers als Fehlbetrag (FB) bezeichnet und ergibt sich durch eine Integration einer Fehlmenge über die Zeit, die durch die folgende Gleichung: $\dot{m}_{W,SOLL} - \dot{m}_{W,IST}$ beschrieben wird. Hierbei bezeichnet mit $\dot{m}_{W,SOLL}$ den Wasserdurchfluss und mit $\dot{m}_{W,IST}$ die Ist-Wassermengen.

Der maximal zulässige Fehlbetrag ergibt sich durch die folgende Gleichung: $FB_{max} = \dot{m}_{W,max} \times t_{max,0}$, wobei $\dot{m}_{W,max}$ die maximale Einspritzwassermenge und $t_{max,0}$ die maximale Zeit ohne Wassereinspritzung bezeichnet. Der bis zur Schnellschlussauslösung aufgelaufene Fehlbetrag wird folgendermaßen errechnet:

$$FB_{\max} \quad = \quad \int_0^{t_{\max}} (\dot{m}_{W,SOLL} - \dot{m}_{W,IST})\, dt \ .$$

Es gilt, dass die maximal erlaubte Zeit für das Erreichen des maximal zulässigen Fehlbetrags dann erreicht ist, wenn der integral ermittelte Fehlbetrag gleich dem maximal zulässigen ist. Dies wird erreicht, wenn die folgende Gleichung erfüllt ist:

$$\int_0^{t_{\max}} (\dot{m}_{W,SOLL} - \dot{m}_{W,IST})\, dt = \dot{m}_{W,\max}\, x\, t_{\max,0} \ .$$

Sofern diese Gleichung nach $t_{\max,0}$ aufgelöst wird, ist die maximal erlaubte Zeit bestimmbar. Allerdings muss hier die Voraussetzung erfüllt sein, dass die ermittelten Wassermengen $m_{W,SOLL}$ und $M_{W,IST}$ gemäß der folgenden Gleichung folgen: $\dfrac{m_{W,SOLL}}{m_{W,IST}} > 1$, was bedeutet, dass die Ist-Wassermenge zu gering ist. Erfindungsgemäß wird in bestimmten Zeitabständen $\Delta t$ die aktuell fehlende Einspritzwassermenge $m_{W,SOLL}$-$m_{W,IST}$ berechnet und mit dem letzten aufgelaufenen Fehlbetrag umgerechnet in eine zulässige Restzeit. Sofern diese berechnete Restzeit eine Taktrate $\Delta t$ unterschreitet, wird das Ventil geschlossen.

In den Unteransprüchen sind vorteilhafte Weiterbildungen angegeben.

In einer ersten vorteilhaften Weiterbildung wird der maximale Wassermengenfehlbetrag $FB_{\max}$ aus einer Multiplikation zwischen einer maximalen Einspritzwassermenge und einer maximalen Zeit gemäß der Gleichung $FB_{\max} = \dot{m}_{W,\max} \times t_{\max}$ gebildet.

In einer weiteren vorteilhaften Weiterbildung wird nach einer jeden Taktrate $\Delta t$ die Ist-Wassermenge $\dot{m}_{W,IST}$ und die Soll-Wassermenge $\dot{m}_{W,SOLL}$ ermittelt. Diese Taktrate kann erfindungsgemäß beliebig gewählt sein, was Auswirkungen auf die Genauigkeit der Regelung hat. Eine kürzere Taktrate führt jedenfalls zu einer genaueren Regelung als eine Regelung mit einer längeren Taktrate $\Delta t$.

Gemäß einer vorteilhaften Weiterbildung wird nach jeder Taktrate $\Delta t$ eine Restzeit $t_{Rest,i}$ ermittelt und das Ventil geschlossen, wenn die Restzeit $t_{Rest,i}$ kleiner dem Wert $\Delta t$ ist, wobei i eine bei Null beginnende Zählung einer Schleife darstellen soll, nach der jeweils die Restzeit $t_{Rest,i}$ berechnet wird. Dies hat den Vorteil, dass eine Integration erfolgt, die dazu führt, dass nicht nur ein Kriterium erfüllt sein muss, um ein Schließen des Ventils zu erreichen.

Erfindungsgemäß wird die Restzeit $t_{Rest,i}$ gemäß der Trapezregel ermittelt.

Die Erfindung wird anhand der schematischen Zeichnungen näher erläutert. Ein Ausführungsbeispiel der Erfindung wird anhand einer Zeichnung näher erläutert. Darin zeigen:

Figur 1 einen Aufbau eines Dampfkraftwerkes,

Figur 2 eine schematische Darstellung eines Ablauf-schemas,

Figuren 3, 4 grafische Darstellungen auf der Zeitachse.

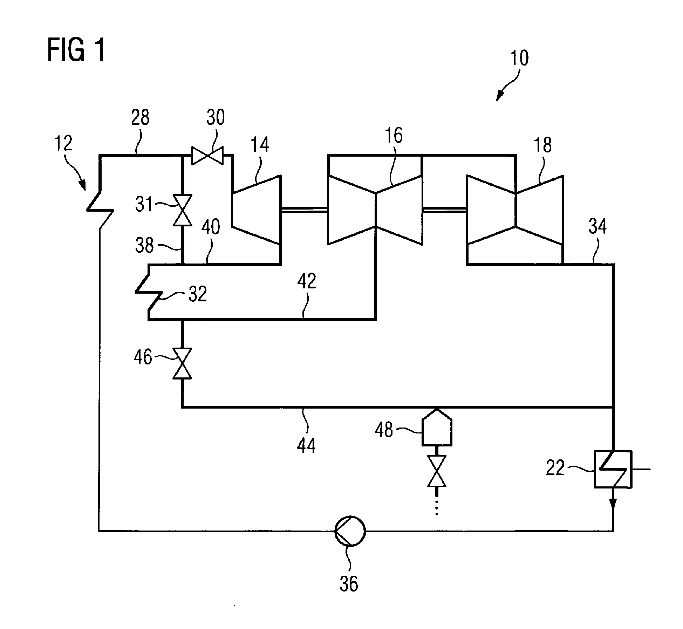

Figur 1 zeigt schematisch den Aufbau eines erfindungsgemäßen Dampfkraftwerks 10. Das Dampfkraftwerk 10 umfasst unter anderem einen Kessel 12, eine Hochdruck-Turbine 14, eine Mitteldruck-Turbine 16, eine Niederdruck-Turbine 18, einen nicht näher dargestellten Generator, einen Kondensator 22 und eine Frischdampfleitung 28. Ein im Kessel 12 erzeugter Frischdampf wird über die Frischdampfleitung 28 und über ein Frischdampfventil 30 zur Hochdruck-Teilturbine 14 geführt. Nach der Hochdruck-Turbine 14 gelangt der ausströmende Dampf zu einem Zwischenüberhitzer 32 und von dort in eine Mitteldruck-Teilturbine 16. Der Ausgang der Mitteldruck-Teilturbine 16 ist mit einem Eingang einer Niederdruck-Teilturbine 18 strömungstechnisch verbunden. Der aus der Niederdruck-Teilturbine 18 ausströmende Dampf wird über eine Niederdruckleitung 34 strömungstechnisch mit dem Kondensator 22 verbunden.

Im Kondensator 22 kondensiert der Dampf zu Wasser und wird über eine Pumpe 36 wieder zum Kessel 12 geführt, wodurch ein Wasserdampfkreislauf geschlossen ist.

Beim Anfahren oder beim Abfahren des Dampfkraftwerks 10 wird der Frischdampf über eine Bypassleitung 38 an der Hochdruck-Turbine 14 vorbeigeleitet und direkt in die kalte Zwischenüberhitzerleitung 40 geführt. Die nach der Zwischenüberhitzung 32 ausgeführte heiße Zwischenüberhitzerleitung 42 wird strömungstechnisch über eine MD-Umleitung 44 mit dem Kondensator 22 strömungstechnisch verbunden. In dieser MD-Umleitstation 44 ist ein MD-Umleitventil 46 und eine Vorrichtung 48 zum Einspritzen von Wasser in die MD-Umleitstation 44 ausgebildet.

Beim Starten bzw. Hochfahren des Dampfkraftwerks 10 wird der Kessel 12 zunächst auf Mindestlast gefahren (meist 30% bis 40%), wobei der erzeugte Dampf üblicherweise zunächst an der Hochdruck-Turbine 14 vorbeigeleitet wird (Bypassbetrieb). Der Bypassbetrieb wird hierbei durch Schließen des im Dampf-Einströmbereich der Hochdruck-Turbine 14 angeordneten Schnellschlussventils 31 realisiert, wobei der Frischdampf über eine Hochdruck-Umleitstation 38 bzw. Bypassleitung 38 geführt, auf ein niedrigeres Temperaturniveau abgespritzt und dann einer Zwischenüberhitzung 32 zugeführt wird und zwar zunächst dem kalten Strang 40 der Zwischenüberhitzung. Der Dampf, der den heißen Strang 42 der Zwischenüberhitzung verlässt, wird über eine Mitteldruck-Umleitstation 44 geführt und nach Kühlung mittels Einspritzwasser in den Kondensator 22 geleitet. Durch ein hohes Druckniveau in der Zwischenüberhitzung 32 ist dabei eine effektive Kühlung der mit Rauchgas beaufschlagten Zwischenüberhitzerrohre gewährleistet.

Die Regelung des Ventils 46 erfolgt wie folgendermaßen beschrieben: Zunächst wird eine Taktrate $\Delta t$ in Sekunden vorbestimmt bzw. eingestellt und des Weiteren ein maximal zulässiger Fehlbetrag $FB_{max}$ (in Kilogramm) berechnet, der in erster Nehrung durch folgende Gleichung ermittelt werden kann: $FB_{max} = \dot{m}_{W,max} \, x \, t_{max,0}$ .

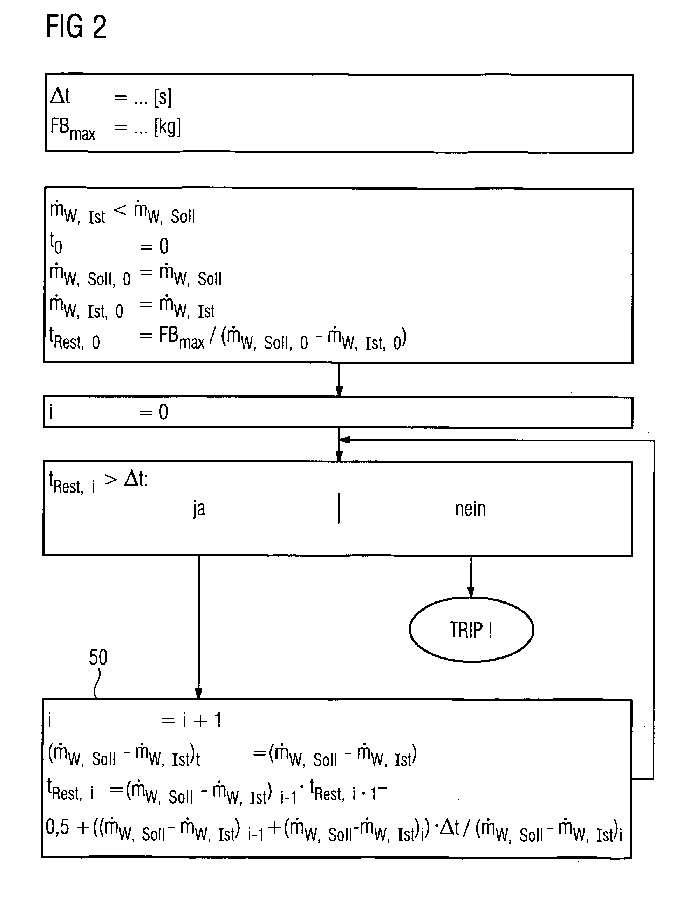

In einem nächsten Schritt wird wie in Figur 2 dargestellt, eine Zeit $t_0$ gleich 0 gesetzt, sofern die Bedingung $\dot{m}_{W,IST}$ kleiner $\dot{m}_{W,SOLL}$ erfüllt ist. Das bedeutet, dass sobald die benötigte Wassermenge in der Vorrichtung 48, die in die MD-Umleitstation 44 geführt wird, geringer ist als die Soll-Wassermenge, beginnt eine Integration. Zunächst wird eine Wassermenge aus einer Kennlinie ermittelt. Anschließend wird über eine Messung die Ist-Wassermenge ermittelt.

Anschließend erfolgt eine Berechnung der Restzeit $$t_{\mathrm{Re}\,st,0} \quad = \quad \frac{FB_{max}}{\dot{m}_{W,SOLL,0} - \dot{m}_{W,IST,0}}$$

Zur weiteren Integration wird die Zählvariable i auf Null gesetzt. Anschließend wird ermittelt, ob die Restzeit größer ist als die Taktrate. Sofern die Restzeit größer ist als die Taktrate wird dieser Fall mit "Ja" zu einer weiteren Berechnungsschleife geführt wie in Figur 2 dargestellt. Das bedeutet, dass der Index $i$ um eins erhöht wird und eine Restzeit gemäß der Trapezregel erneut berechnet wird. Dazu wird die im Kasten 50 aufgeführte Formel verwendet.

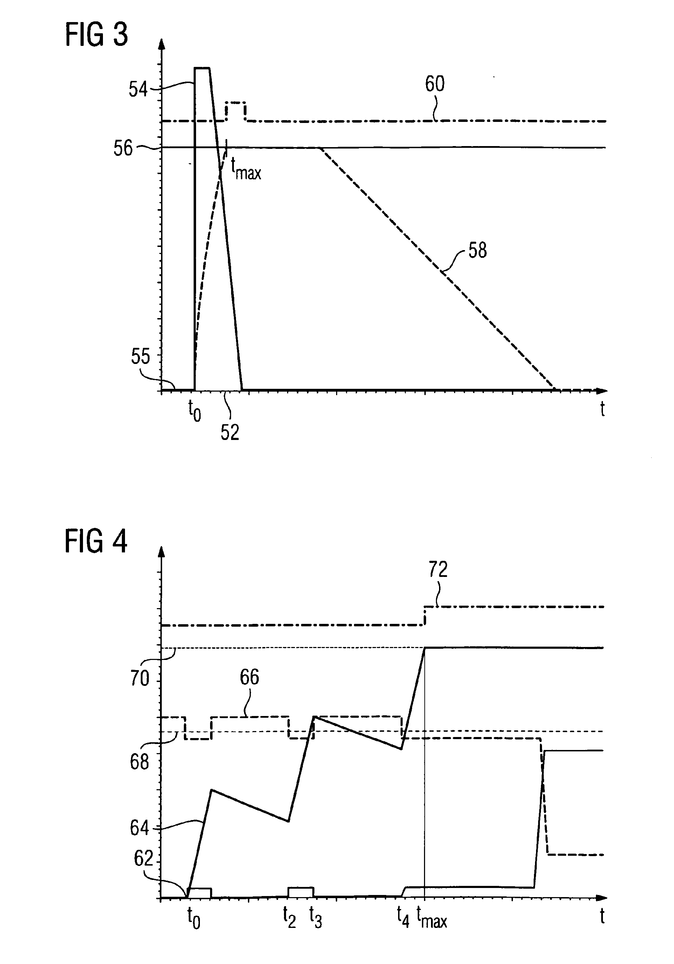

Die Figuren 3 und 4 zeigen verschiedene Verläufe der einzelnen Größen.

Die Figur 3 zeigt den Verlauf des Sollwerts 54 und den maximalen Fehlbetrag $FB_{max}$ 56 auf einer Zeitskala 52.

Zur Zeit $t$ kleiner $t_0$ steht kein Einspritzwasser zur Verfügung, das bedeutet, dass im Zeitraum bis $t_0$ Einspritzwassermangel 55 herrscht. Ab dem Zeitpunkt $t_0$ beginnt die Integration, die durch die Kurve 58 dargestellt wird und zu einem Schnellschluss zum Zeitpunkt $t_{max}$ führt. Die Auslösung des Umleitschnellschlusses wird durch die Kurve 60 dargestellt. Die Figur 3 stellt die Situation dar, dass 100% Fehlbetrag der Wassermenge vorliegt. Das bedeutet, dass zum Beispiel das Ventil trotz Anforderung in der Position "zu" verbleibt.

Die Figur 4 zeigt einen wiederholenden Ausfall der Wassereinspritzung innerhalb einer kurzen Zeitstrecke. Zum Zeitpunkt $t_0$ beginnt der Start der Integration 62. Der Integrator 64 läuft zunächst steil an und läuft anschließend zurück. Während dieser Zeit liegt der Istwert 66 über dem Sollwert. Das bedeutet, dass während dieser Zeit ein Schnellschluss nicht erforderlich ist. Sobald der Istwert zum Zeitpunkt $t_2$ wieder unter den Sollwert fällt, wird die Integration fortgeführt, was durch den linearen Anstieg des Integrators 64 dargestellt wird. Sofern der Istwert zum Zeitpunkt $t_3$ wieder größer als der Sollwert ist, läuft der Integrator wieder zurück, was durch die gestufte Linie dargestellt ist. Zum Zeitpunkt $t_4$ ist der Istwert wieder unter dem Sollwert, was wieder zu einem Anstieg des Integrators führt. Allerdings steigt der Integrator bis zum Wert $FB_{max}$ 70 an, was dazu führt, dass ein Schnellschluss 72 zum Zeitpunkt $t_{max}$ ausgeführt wird.

## Patentansprüche

1. Verfahren zur Regelung eines Ventils (46),
   wobei das Ventil (46) in einer Dampfleitung (44) angeordnet wird,
   wobei die Dampfleitung (44) eine Vorrichtung (48) zum Einspritzen von Wasser aufweist,
   wobei eine Ist-Wassermenge $\dot{m}_{W,IST}$ und eine Soll-Wassermenge $\dot{m}_{W,SOLL}$ und
   ein maximaler Wassermengenfehlbetrag $FB_{max}$ ermittelt werden,
   und ein Quotient $t_{Rest,0}$ zwischen dem maximalen Wassermengenfehlbetrag $FB_{max}$ und der Differenz der Soll-Wassermenge $\dot{m}_{W,SOLL}$ und der Ist-Wassermenge $\dot{m}_{W,IST}$ gemäß der Gleichung $$t_{\mathrm{Re}\,st,0} \quad = \quad \frac{FB_{max}}{\dot{m}_{W,Soll} - \dot{m}_{W,IST}}$$
   gebildet wird und das Ventil (46) schließt, wenn $t_{Rest,0}$ kleiner einem Wert $\Delta t$ ist.

2. Verfahren nach Anspruch 1,
wobei der maximale Wassermengenfehlbetrag $FB_{max}$ aus einer Multiplikation zwischen einer maximalen Einspritzwassermenge $\dot{m}_{W,max}$ und einer maximalen Zeit $t_{max,0}$ gemäß der Gleichung $FB_{max} = A_{W,max} \times t_{max,0}$ gebildet wird.

3. Verfahren nach einem der vorhergehenden Ansprüche, wobei der Wert $\Delta t$ eine Taktrate ist und die Ist-Wassermenge $\dot{m}_{W,IST}$ und die Soll-Wassermenge $\dot{m}_{W,SOLL}$ nach jeder Taktrate $\Delta t$ ermittelt werden.

4. Verfahren nach Anspruch 3,
wobei nach jeder Taktrate $\Delta t$ eine Restzeit $t_{Rest,i}$ ermittelt wird und das Ventil schließt,
wenn die Restzeit $t_{Rest,i}$ kleiner dem Wert $\Delta t$ ist,
wobei $i$ eine bei 0 beginnende Zählung einer Schleife darstellen soll, nach der jeweils die Restzeit $t_{Rest,i}$ berechnet wird.

5. Verfahren nach Anspruch 4,
wobei die Restzeit $t_{Rest,i}$ nach einer Schleife gemäß folgender Formel ermittelt wird:

$$t_{Rest,i} = ((\dot{m}_{W,SOLL} - \dot{m}_{W,IST})_{i-1} \times t_{REST,i-1} -$$
$$0{,}5 \times ((\dot{m}_{W,SOLL} - \dot{m}_{W,IST})_{i-1} + (\dot{m}_{W,SOLL} - \dot{m}_{W,IST})_i) \times \Delta t) / .$$
$$(\dot{m}_{W,SOLL} - \dot{m}_{W,IST})_i .$$

6. Verfahren nach Anspruch 4 oder 5,
wobei die Restzeit $t_{Rest,i}$ gemäß der Trapezregel ermittelt wird

7. Verfahren nach einem der vorhergehenden Ansprüche, wobei das in die Dampfleitung (44) eingespritzte Wasser zur Kühlung eines in der Dampfleitung (44) strömenden Dampfes vorgesehen ist.

8. Verfahren nach einem der vorhergehenden Ansprüche, wobei der maximale Fehlbetrag $FB_{max}$ eine fehlende Maximalmenge an zur Kühlung in die Dampfleitung (44) eingespritztem Wasser darstellt und gemäß folgender Gleichung ermittelt wird:

$$FB_{max} = \dot{m}_{W,max} \times t_{max,0} ,$$

wobei $\dot{m}_{W,max}$ eine maximale Einspritzwassermenge und $t_{max,0}$ eine maximale Zeit ohne Wassereinspritzung darstellt.

FIG 1

# FIG 2

$$\Delta t \quad = \ldots \text{[s]}$$
$$FB_{max} \quad = \ldots \text{[kg]}$$

$$\dot{m}_{W,\,Ist} < \dot{m}_{W,\,Soll}$$
$$t_0 \qquad = 0$$
$$\dot{m}_{W,\,Soll,\,0} = \dot{m}_{W,\,Soll}$$
$$\dot{m}_{W,\,Ist,\,0} = \dot{m}_{W,\,Ist}$$
$$t_{Rest,\,0} \qquad = FB_{max} / (\dot{m}_{W,\,Soll,\,0} - \dot{m}_{W,\,Ist,\,0})$$

$$i \qquad = 0$$

$$t_{Rest,\,i} > \Delta t:$$

ja | nein

TRIP !

50

$$i \qquad = i + 1$$
$$(\dot{m}_{W,\,Soll} - \dot{m}_{W,\,Ist})_t \qquad = (\dot{m}_{W,\,Soll} - \dot{m}_{W,\,Ist})$$
$$t_{Rest,\,i} = (\dot{m}_{W,\,Soll} - \dot{m}_{W,\,Ist})_{i-1} \cdot t_{Rest,\,i\cdot 1}^{-}$$
$$0{,}5 + ((\dot{m}_{W,\,Soll} - \dot{m}_{W,\,Ist})_{i-1} + (\dot{m}_{W,\,Soll} - \dot{m}_{W,\,Ist})_i) \cdot \Delta t / (\dot{m}_{W,\,Soll} - \dot{m}_{W,\,Ist})_i$$

FIG 3

FIG 4

Europäisches
Patentamt

European
Patent Office

Office européen
des brevets

**EUROPÄISCHER RECHERCHENBERICHT**

Nummer der Anmeldung

EP 10 00 1533

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 669 566 A1 (WEINHOLD KARL [DE]) 30. August 1995 (1995-08-30) * Spalte 1, Zeilen 18-42 * ----- | 1-8 | INV. G05D23/13 |
| A | JP 58 168111 A (TOKYO SHIBAURA ELECTRIC CO) 4. Oktober 1983 (1983-10-04) * Zusammenfassung * ----- | 1-8 | |

RECHERCHIERTE
SACHGEBIETE (IPC)

G05D

Der vorliegende Recherchenbericht wurde für alle Patentansprüche erstellt

| Recherchenort | Abschlußdatum der Recherche | Prüfer |
|---|---|---|
| München | 21. Juli 2010 | Messelken, M |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 10 00 1533

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-07-2010

| Im Recherchenbericht angeführtes Patentdokument | Datum der Veröffentlichung | Mitglied(er) der Patentfamilie | Datum der Veröffentlichung |
|---|---|---|---|
| EP 0669566 A1 | 30-08-1995 | AU 678080 B2<br>AU 1002695 A<br>CA 2139546 A1<br>CN 1113000 A<br>DE 4406222 A1<br>ES 2127872 T3<br>US 5632299 A<br>ZA 9500931 A | 15-05-1997<br>07-09-1995<br>26-08-1995<br>06-12-1995<br>05-10-1995<br>01-05-1999<br>27-05-1997<br>09-10-1995 |
| JP 58168111 A | 04-10-1983 | KEINE | |

EPO FORM P0461

Für nähere Einzelheiten zu diesem Anhang : siehe Amtsblatt des Europäischen Patentamts, Nr.12/82